# EUROPEAN PATENT SPECIFICATION

(11) **EP 2 837 162 B1**
(45) Date of publication and mention of the grant of the patent: **02.01.2019**
(21) Application number: 13717000.7
(22) Date of filing: 08.04.2013
(51) Int. Cl.: H04L 29/08, H04L 29/06, H04L 12/22

(54) **APPARATUS, METHOD, SYSTEM AND COMPUTER PROGRAM PRODUCT FOR SERVER FAILURE HANDLING**
VORRICHTUNG, VERFAHREN, SYSTEM UND KOMPUTERPROGRAMMPRODUKT ZUR VERWALTUNG VON SERVER-AUSFALL
DISPOSITIF, PROCÉDÉ, SYSTÈME ET PRODUIT DE PROGRAMME D'ORDINATEUR POUR LA GESTION DE DÉFAILLANCE DE SERVEUR

(30) Priority: 11.04.2012 WO PCT/EP2012/056585
(43) Date of publication of application: 18.02.2015
(73) Proprietor: Nokia Solutions and Networks Oy, 02610 Espoo (FI)
(72) Inventor: KORHONEN, Jouni, FI-11100 Riihimäki (FI); KALL, Anders Jan Olof, FI-02730 Espoo (FI)
(74) Representative: Nokia EPO representatives
(86) International application number: PCT/EP2013/057290
(87) International publication number: WO 2013/153022

(56) References cited:
- WO-A1-2010/121649
- US-A1- 2007 157 308

## Description

### Field of the Invention

The present invention relates to server failure handling. More specifically, the present invention relates to methods, apparatuses, system and computer program product for server failure handling.

### Background of the Invention

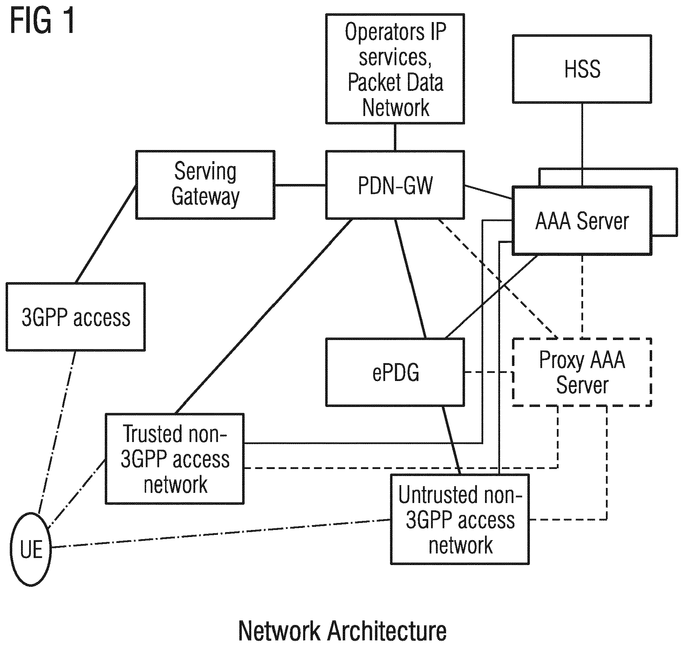

In a Communication network such as Global System for Mobile Communications (GSM, often called 2G), Universal Mobile Terrestrial System (UMTS, often called 3G), LTE (Long Term Evolution) network, WLAN (Wireless Local Access Network) networks or HRPD (High Rate Packet Data) networks, AAA servers may provide functionality of Authentication, Authorization and Accounting to both operators and subscribers. Fig.1 illustrates a network architecture comprising one or more AAA servers. A UE (User Equipment) may be connected to a packet data communication network via the PND-GW (Packet Data Network-Gateway). The UE using a 3GPP (3^{rd} Generation Partnership Project) access network is connected to the PDN-GW via the so-called SGW (Serving GateWay). The UE using a so-called untrusted non-3GPP access network, e.g. WLAN, is connected to the PDN-GW via the ePDG (evolved Packet Data Network-Gateway). The UE using a so-called trusted non-3GPP access network, e.g. HRPD or WLAN, is connected to the PDN-GW via an access gateway (not shown in the figure) inside the trusted non-3GPP access network. The UE's data connections are shown by solid lines and the corresponding radio connections with double-dotted lines in Fig. 1.

The network entities described above are also connected to the AAA Server (or Proxy AAA Server) in order to request authentication of the UE. The AAA Server in turn may be connected to a HSS (Home Subscriber Server) in order to request authentication information for the UE or to request subscriber information associated with the UE. The signaling connections to and from the AAA Server are shown by solid lines in Fig. 1.

In the case of roaming situation (i.e. when aUE has left its home network and is residing in a visited network), PND-GW, ePDG, untrusted non-3GPP access network and Trusted non-3GPP access network may be connected to the AAA servers via a proxy AAA server as shown by the dashed lines in Fig.1.

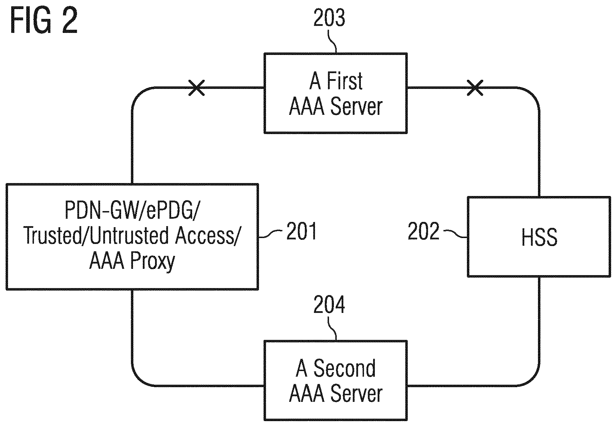

In reality, an AAA server (e.g. a first AAA server 203) may fail, either temporarily or for a longer period, as shown in Fig.2. In order to minimize the impact of the failure, any affected network entity 201 may resort to the service from an alternative AAA server (e.g. a second AAA server 204). The affected network entity 201 may be any of a PND-GW, an ePDG, a network element within an untrusted non-3GPP access network or a network element within a trusted non-3GPP access network in non-roaming situation or a proxy AAA server in roaming situation.

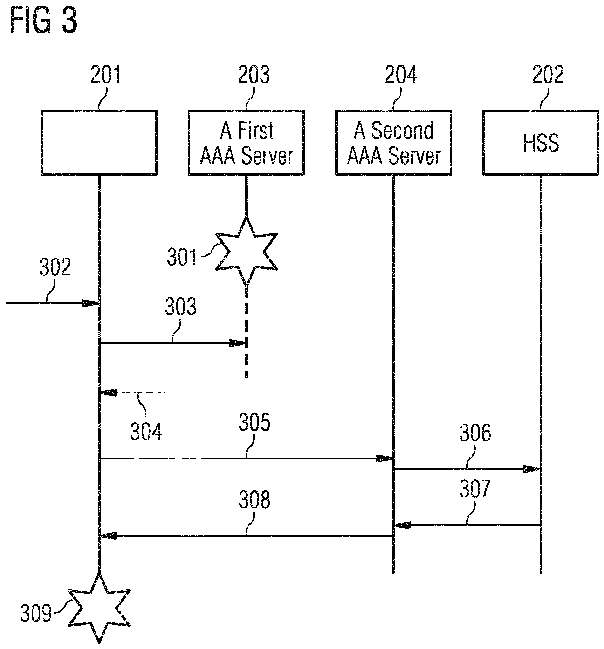

Fig.3 further depicts the details of the failure situation. Assuming an AAA server, e.g. the first AAA server 203, suddenly fails as shown in 301. An access indication or authentication request 302 comprising a user identity, e.g. IMSI (International Mobile Subscriber Identity), associated with an UE (not shown in Fig. 2) arrives at the network entity 201. Said network entity 201 may send a corresponding authentication request 303 comprising the user identity to an AAA server (e.g. the first AAA server 203), which is associated with the user identity, as it is not aware that the first AAA server 203 has failed. Consequently, no response will be received from the first AAA server 203, which may, e.g. trigger a timer 304. When the timer expires, the network entity 201 may select an alternative AAA server, e.g. the second AAA server 204, and re-send the authentication request 305 comprising the user identity to that server. The second AAA server 204 may send a corresponding authentication message 306 comprising the user identity and its own server ID (also called server name) to the HSS 202. However, the HSS 202 is not aware of the failure of the first AAA server 203 either. After comparing the received server ID and the server ID stored in its database originally associated with the user identity it may inform the second AAA server 204 in step 307 that the first AAA server 203 is associated with the user identity and thus should handle the request. Accordingly, the second AAA server 204 may reply to the affected network entity 201 in step 308 that the first AAA server 203 should be used instead. The affected network entity 201 may try to send the authentication message to the failed AAA server 203 again as depicted in step 303 or simply determines that authentication request 303 has failed in step 209 and, as the result, the session is not established.

The failure of an AAA server 203 may also happen after a communication session associated with the user identity has been established. Re-authentication message may be triggered in step 302 and the failure of the first AAA server 203 may cause the session to be lost in the similar way as shown in the above example.

WO 2010/121649 A1 discloses an intra-realm authentication, authorization and accounting fallback mechanism comprising detecting a failure of an authentication server serving an authentication client within a first sub-realm of a single-realm authentication system, notifying a second sub-realm of the authentication system of the failure, and subsequently routing authentication messages of the authentication client to a fallback authentication server within the second sub-realm of the authentication system.

US 2007/0157308 A1 discloses failure occurring at an authenticator or authentication server level and an authenticator being configured to store multiple IP addresses of authentication servers with which to communicate.

### Summary of the Invention

The present invention relates to a AAA server and a subscriber server as defined in independent claims 8 and 10, respectively, and to corresponding methods and computer program products as defined in independent claims 1, 3, 14 and 15, respectively. Particular embodiments are defined in the dependent claims.

According to an exemplary first aspect of the invention, there is provided a method for a first server apparatus comprising receiving a first authentication request from a network element apparatus, wherein said first authentication request is not relating to any ongoing session of said first server apparatus and comprises an user identity and a first indication indicating connection failure between the network element apparatus and a second server apparatus which is associated with said user identity for providing authentication related service; concluding, based on the received first authentication request, said second server apparatus has failed; sending a second authentication request to a subscriber server apparatus, wherein said second authentication request comprising said user identity and a second indication indicating the failure of said second server apparatus.

According to one embodiment of the invention, the method further comprises receiving a first response from said subscriber server apparatus and sending a second response to said network element apparatus.

According to another embodiment of the invention, wherein said first indication is the T-flag.

According to another aspect of the invention, there is provided a method for a subscriber server apparatus comprising receiving, from a first server apparatus, a first authentication request comprising an user identity and an identity of said first server apparatus, wherein said first server apparatus being capable for provide authentication related service with respect to said user identity; determining if a second server apparatus, originally associated with said user identity for providing authentication related service, is available for providing said service; registering said first server apparatus as the server associated with said user identity for providing authentication related service, if said second server apparatus is not available; sending a response to said first server apparatus to acknowledge the first authentication request.

According to further development of the invention, wherein said first authentication request comprises a first indication indicating the failure of the second server apparatus and said identity of the first server apparatus being different from an identity of the second server apparatus.

According to further modification of the invention, the method for the second apparatus further comprises receiving an indication from the first server apparatus indicating the failure of said second server apparatus.

According to another embodiment of the invention, wherein determining if said second server apparatus is available comprises attempting to connect to said second server apparatus periodically and checking if any response is heard from said second server apparatus.

According to a third embodiment of the invention, the method for the second apparatus further comprises removing the registration of said second server apparatus from said subscriber server apparatus if it is determined that said second server apparatus is not available for providing authentication related service.

According to a third aspect of the invention, there is provided a first server apparatus comprising a processor, a memory unit, a receiver and a transmitter, wherein said receiver is configured to receive a first authentication request from a network element apparatus, wherein said first authentication request is not relating to any ongoing session of said first server apparatus and comprises an user identity and a first indication indicating the connection failure between the network element apparatus and a second server apparatus which is associated with said user identity for providing authentication related service; said processor is configured to conclude, based on the received first authentication request, said second server apparatus has failed; said processor is further configured to send a second authentication request to a subscriber server apparatus via said transmitter, wherein said second authentication request comprising said user identity and a second indication indicating the failure of said second server apparatus.

According to one embodiment of the invention, wherein said receiver of the first server apparatus is further configured to receive to a first response from said subscriber server apparatus and said processor is further configured to send a second response to said network element apparatus via said transmitter.

According to another embodiment of the invention, wherein said first indication is T-flag.

According to a fourth aspect of the invention, there is provided a subscriber server apparatus comprising a processor, a memory unit, a receiver and a transmitter, wherein said receiver is configured to receive, from a first server apparatus, a first authentication request comprising an user identity and an identity of said first server apparatus, wherein said first server apparatus being capable for provide authentication related service with respect to said user identity; said processor is configured to determine if a second server apparatus, originally associated with said user identity for providing authentication related service, is available for providing said service, register said first server apparatus as the server associated with said user identity for providing authentication related service, if said second server apparatus is not available, and send a response to said first server apparatus to acknowledge the first authentication request.

According to one embodiment of the invention, wherein said first authentication request comprises a first indication indicating the failure of said second server apparatus and said identity of the first server apparatus being different from an identity of the second server apparatus.

According to another embodiment of the invention, said receiver of the subscriber server apparatus is further configured to receive an indication from a first server apparatus indicating the failure of said second server apparatus.

According to a third embodiment of the invention, wherein in order to determine if said second server apparatus is available, said processor of the second apparatus is further configured to attempt to connect to said second server apparatus periodically and to check if any response is heard from said second server apparatus.

According to further development of the invention, wherein said processor of the subscriber server apparatus is further configured to remove the registration of said second server apparatus from said subscriber server apparatus if it is determined that said second server apparatus is not available for providing authentication related service.

According to a fifth aspect of the invention, there is provided a computer program product for a first server apparatus comprising means for receiving a first authentication request from a network element apparatus, wherein said first authentication request is not relating to any ongoing session of said first server apparatus and comprises an user identity and a first indication indicating connection failure between the network element apparatus and a second server apparatus which is associated with said user identity for providing authentication related service; means for concluding, based on the received first authentication request, said second server apparatus has failed; means for sending a second authentication request to a subscriber server apparatus, wherein said second authentication request comprising said user identity and a second indication indicating the failure of said second server apparatus.

According to a sixth aspect of the invention, there is provided a computer program product for a subscriber server apparatus comprising means for receiving, from a first server apparatus, a first authentication request comprising an user identity and an identity of said first server apparatus, wherein said first server apparatus being capable for provide authentication related service with respect to said user identity; means for determining if a second server apparatus, originally associated with said user identity for providing authentication related service, is available for providing said service;
means for registering said first server apparatus as the server associated with said user identity for providing authentication related service, if said second server apparatus is not available; means for sending a response to said first server apparatus to acknowledge the first authentication request.

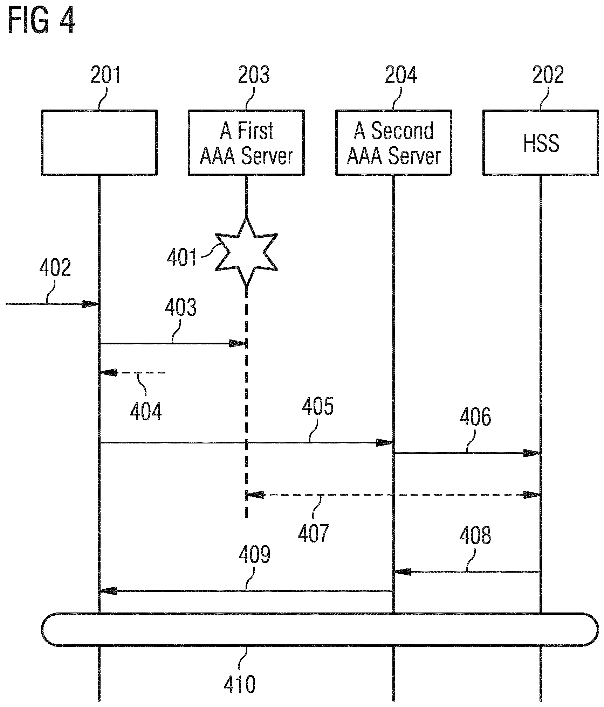

Embodiments of the present invention may have one or more of following advantages. As shown in Fig.4, one embodiment of the invention does not require any changes to the signalling of the interface (also called SWx interface) between an AAA Server (e.g. the first/second AAA server 203/204) and an HSS (e.g. HSS 202).

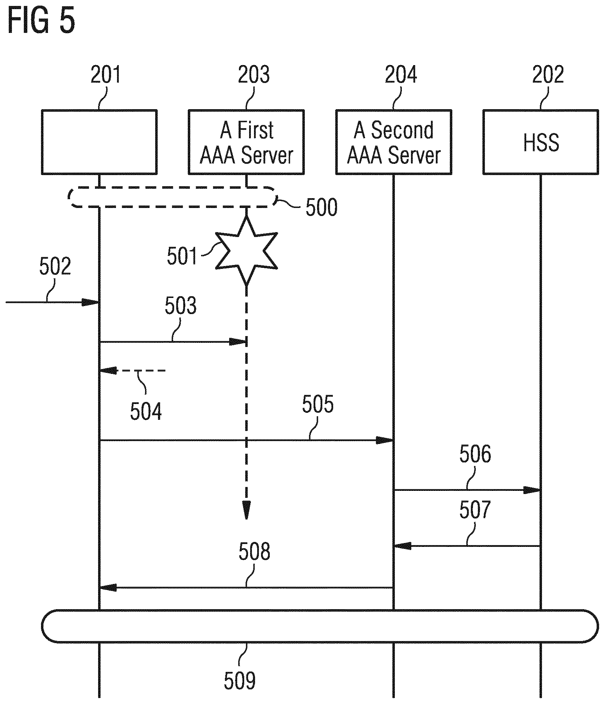

The embodiments of the invention shown in Fig.4 and Fig.5 may ensure that a session with respect to a user identity will be established or an established session will be maintained even if the AAA server originally associated with the user identity has failed.

### Brief Description of the Drawings

Exemplary embodiments of the invention are described below, by way of example only, with reference to the following numbered drawings.
Figure 1 is based on the applicable 3GPP specifications and illustrates an exemplary overview of the network architecture relevant to the invention.
Figure 2 illustrates a situation where an AAA Server fails to function.
Figure 3 illustrates the failure situation in detail.
Figure 4 shows a solution according to one aspect of the invention.
Figure 5 shows another solution according to another aspect of the invention.
Figure 6 depicts a schematic block diagram illustrating an apparatus according to a further aspect of the invention.
Figure 7 depicts a schematic block diagram illustrating another apparatus according to a fourth aspect of the invention.

### Description of the Embodiments of the Invention

Figure 4 shows a solution according to one aspect of the invention. The steps 401 to 406 in Fig. 4 are identical to the steps 301 to 306 in Fig.3. According to one aspect of the invention, upon receiving the authentication request 406 comprising the user identity and the server ID of the second AAA server 204, the HSS 202 may determine the status of the AAA server (e.g. first AAA server 203) associated with (or assigned to) the user identity in step 407. If the HSS 202 determines that the first AAA server 203 has failed, it may clear (or remove) the first AAA Server 203 registration from its database and register in its database the AAA server (e.g. second AAA server 204) sending the message 406 as the AAA server associated with the user identity. If the HSS 202 cannot find any AAA server associated with the user identity from its database, it may register the AAA server (e.g. the second AAA server 204) sending the message 406 in its database as the AAA server associated with the user identity.

According to one embodiment of the invention, the HSS 202 may detect if an AAA server has failed or not by checking the transmission link with that AAA server, e.g. the first AAA server 203. The HSS 202 may attempt to connect to the first AAA server 203 periodically, e.g. every 30s. No response to such an attempt may suggest that the first AAA server 203 has failed.

According to another embodiment of the invention, ICMP (Internet Control Message Protocol) may be deployed in the transmission link layer between an AAA server, e.g. the first AAA server 203, and the HSS 202. In this case the HSS 202 may receive an ICMP indication from an intermediate network entity (not shown in the figure) that the AAA server is not reachable when the first AAA server 203 is down.

According to a further embodiment of the invention the HSS 202 may clear (or remove) the registration of an AAA server from its database if the HSS 202 has determined that the AAA server is down.

Said HSS 202 may send an acknowledgement message 408 to the second AAA server 204. Consequently, the second AAA server 204 may also acknowledge the authentication request to the network entity 201 in step 409. After receiving a positive acknowledgement message 409 from the second AAA server 204, a data communication session 410 associated with the user identity may be established.

As stated above, the failure of an AAA server, e.g. the first AAA server 203, may also happen after a communication session associated with the user identity has been established and in such a case a re-authentication may be triggered in step 402 instead. With the solution described above, the loss of the communication session may be avoided.

Figure 5 illustrates another situation according to another aspect of the invention. The steps 501 to 504 in Fig. 5 are identical to the steps 301 to 304 in Fig.3. When the timer 504 expires, the network entity 201 may realize that the first AAA server 203 is not responding to the request 503. The network entity 201 may then send an authentication request 505 comprising the user identity (e.g. IMSI) associated with the UE (not shown in Fig.5) to a newly selected AAA server, e.g. the second AAA server 204. As there is no session established previously between the network entity 201 and the second AAA server 204, the request 505 may contain a session ID that is different from any ongoing session of the second AAA server 204. In other words, the request 505 is not relating to any ongoing session of the second AAA server 204.

According to IETF RFC 3588, in the event that a network element, e.g. the network entity 201, has detected a transport failure with a peer, for instance the first AAA server 203, it may forward all its pending request messages to an alternate agent (such as the second AAA server 204), if possible. This is commonly referred to as failover, which may be indicated by the so-called T-flag, an information element in Diameter signaling according to IETF RFC 3588, which is used to indicate that a network transport failure has been detected. The authentication request 505 therefore may contain the T-flag to indicate the failure of transport connection between the sender (i.e. network entity 201) of the message 505 and its peer, i.e. the AAA server (e.g. the first AAA server 203) originally associated with the user identity.

According to one embodiment of the invention, an AAA server such as the second AAA server 204 may conclude that the AAA server (e.g. the first server 203) originally associated with the user identity has failed because the request 505 comprises the T-flag being set and it is not relating to any ongoing session of the second AAA server 204. The second AAA server 204 shall not forward the T-flag as such to the HSS 202 when sending the message 506 because there is no network transport failure on the signaling link between the sender (i.e. the second AAA server 204) of the message 506 and its peer, i.e. the network entity 201.

According to one embodiment of the invention, the second AAA server 204 may send an authentication request message 506 to the HSS 202. The message 506 may comprise the identity of the sender (e.g. the second AAA server 204) and an indication specifically indicating the failure of the AAA server (e.g. the first AAA server 203) originally associated with the user identity. The information element may be named as "original AAA Server Down", for instance. If the information element is set, it means that the AAA server (e.g. the first AAA server 203) originally associated with (or previously assigned to) the user identity, but not the AAA server (e.g. the second AAA server 204) sending the message, may have failed. The information element may be mapped to Diameter AVP (Attribute Value Pair) using the same name.

Upon receiving the modified authentication request message 506, the HSS 202 may check if the identity (e.g. server name) of the sender contained in the request 506 is the same as the identity of the AAA server (e.g. the first AAA server 203) previously assigned to the user identity. If they are different and the request comprises the above-mentioned information element, the HSS 202 may conclude that the AAA server (e.g. the first AAA server 203) originally associated with the user identity is down. Then the HSS 202 may clear (or remove) the registration of the first AAA server 203 from its database and register in its database the second AAA server 204 as the AAA server associated with the user identity. The HSS 202 may acknowledge the modified authentication request 506 to the second AAA server 204 in step 507. Consequently, the second AAA server 204 may acknowledge the authentication request 505 to the network entity 201 in step 508 and a session associated with the user identity may be established as shown in 509.

As explained previously, the failure of an AAA server may also happen after a communication session associated with the user identity has been established between an UE (not shown in Fig.5) and the first AAA server 203 as shown in 500. In such a case a re-authentication may be triggered in step 502 instead. There is no change in the rest of the messages as the authentication request 505 is not relating to any ongoing session of the second AAA server 204 anyway. With the solution described above, the loss of the communication session may be avoided.

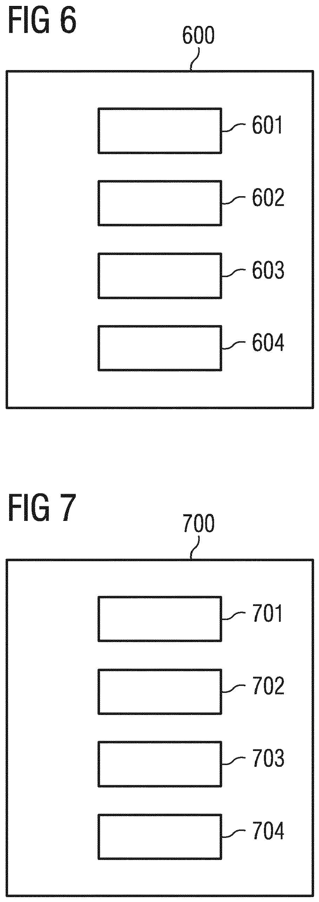

Figure 6 shows a schematic block diagram illustrating an apparatus 600 according to a further aspect of the invention. The apparatus may comprise a processor (or a processing means) 601, a memory unit 602, a transmitter (or a transmitting means) 603 and a receiver (or receiving means) 604. It may be noted that the receiver or transmitter may be an integral transceiver or separate functional entities. The memory unit may comprise a database (not shown in the figure). The apparatus 600 may be an AAA server such as the first/second AAA server 203/204.

The receiver 604 may receive the authentication/re-authentication request 405/505 comprising a user identity associated with a UE (not shown in the figure) from a network element, e.g. the network entity 201. According to one embodiment of the invention, the authentication request message 505 may comprise an indication such as the T-flag as described previously, indicating the failure of transport connection between the sender (e.g. network entity 201) of the message 505 and its peer, i.e. the AAA server (e.g. the first AAA server 203) originally associated with the user identity. As the request 505 is not relating to any ongoing session of the apparatus 600 and the T-flag is set, the processor 601 may conclude that the AAA server (e.g. the first AAA server 203) originally associated with the user identity has failed.

The processor 601 may send a corresponding authentication request message 406/506 comprising said user identity to the HSS 202 via the transmitter 603.

According to another embodiment of the invention, said corresponding authentication request message 506 may comprise an indication indicating the failure of the AAA server, e.g. the first AAA server 203, associated with the user identity. The indication may be an information element named as "original AAA server down" as described previously. Setting the information element means that the AAA server associated with (or previously assigned to) a user identity contained in the message, but not the server sending the message comprising the information element, is down.

Figure 7 shows a schematic block diagram illustrating an apparatus 700 according to a fourth aspect of the invention. The apparatus may comprise a processor (or a processing means) 701, a memory unit 702, a transmitter (or a transmitting means) 703 and a receiver (or receiving means) 704. It may be noted that the receiver or transmitter may be an integral transceiver or separate functional entities. Said memory unit may comprise a database (not shown in the figure). The apparatus 700 may be a HSS, e.g. the HSS 202.

The receiver 704 may receive, from an AAA server, e.g. the second AAA server 204, an authentication/re-authentication request, e.g. the request message 406/506, comprising an identity of the sender (e.g. the second AAA server 204) and a user identity associated with a UE (not shown in the figure). The processor may determine the status of the AAA server (e.g. the first AAA server 203) originally associated with the user identity. According to one embodiment of the invention, said processor may check the transmission link between the AAA server (e.g. the first AAA server 203) and the apparatus 700 in order to determine if the AAA server is down. The HSS 202 may attempt to connect to an AAA server such as the first AAA server 203 periodically, e.g. every 30s. No response to such an attempt may suggest that the first AAA server 203 has failed.

According to another embodiment of the invention, an intermediate network entity (not shown) may notify the apparatus 700 that an AAA server, e.g. the first AAA server 203, is down.

According to a third embodiment of the invention, said processor 701 may clear (or remove) the registration of an AAA server from its database if the AAA server is deemed to be down.

According to a fourth embodiment of the invention, the request message 506 may comprise an indication indicating the failure of the AAA server, e.g. the first AAA server 203, associated with the user identity. The indication may be an information element named as "original AAA server down" as described previously. Setting the information element means that the AAA server originally associated with (or previously assigned to) the user identity contained in the message, but not the server sending the message comprising the information element, is down. The processor 701 may check if the identity of the sender (e.g. server name) contained in the request 506 is identical to the identity of the AAA server originally associated with the user identity. If they are different and the request also contains the indication indicating the failure of the original AAA server, the processor 701 may clear (or remove) the registration of the original AAA server from its database and register in its database the AAA server (e.g. the second AAA server 204) which sends the request 506 as the AAA server associated the user identity.

If the processor 701 cannot find an AAA server associated with the user identity from its database, it may register the AAA server (e.g. the second AAA server 204) sending the request 406/506 in its database as the AAA server associated the user identity.

If the processor 701 determines that an AAA server (e.g. the first AAA server 203) associated with the user identity is down, either based on transmission link check or an indication from an intermediate network entity (not shown in the figure) that the AAA server is not reachable, it may clear (or remove) the registration of that AAA server from its database and register the AAA server (e.g. the second AAA server 204) sending the request 406/506 in its database as the AAA server associated the user identity.

Throughout the description, when an AAA server is not reachable (i.e. it does not respond to a service request, e.g. an authentication request) with respect to an network entity (e.g. network entity 201), it may be described as "an AAA server is down", "an AAA server has failed", "connection failure between an AAA server and a network entity", "AAA server is not available" or "the failure of an AAA server".

According to a fifth aspect of the invention, when an AAA server (e.g. the second AAA server 204) receives a request message comprising the T-flag being set and the message is not relating to any ongoing session of the AAA server, the AAA server shall send an indication named e.g. "Original AAA Server Down" to an HSS (e.g. the HSS 202), indicating that the AAA server (e.g. the first AAA server 203) previously assigned to an subscriber is down.

According to a sixth aspect of the invention, when a HSS (e.g. the HSS 202) receives a message (e.g. 506) containing an indication, e.g. the AVP "Original AAA Server Down", indicating that an AAA server (e.g. the first AAA server 203) previously assigned to an subscriber is not reachable, the HSS may compare the identity (e.g. server name) of the sender of the message and the identity of the AAA server previously assigned to the subscriber. If they are different, the HSS may remove that AAA server name (or the server identity) from its database and store the AAA server name (or the server identity) of the alternate AAA server that sent the message containing the indication.

According to one embodiment of the invention, the "Original AAA Server Down" AVP may be of type Unsigned32 and it may contain a bit mask or be represented by a bit. When that bit is set, it may indicate that an AAA server previously assigned to an subscriber (or a user identity) may have failed.

For the purpose of the present invention as described above, it should be noted that
- method steps likely to be implemented as software code portions and being run using a processor at one of the server entities are software code independent and can be specified using any known or future developed programming language;
- method steps and/or devices likely to be implemented as hardware components at one of the server entities are hardware independent and can be implemented using any known or future developed hardware technology or any hybrids of these, such as MOS, CMOS, BiCMOS, ECL, TTL, etc, using for example ASIC components or DSP components, as an example;
- generally, any method step is suitable to be implemented as software or by hardware without changing the idea of the present invention;
- devices can be implemented as individual devices, but this does not exclude that they are implemented in a distributed fashion throughout the system, as long as the functionality of the device is preserved.

It is to be understood that the above description is illustrative of the invention and is not to be construed as limiting the invention. Various modifications and applications may occur to those skilled in the art without departing from the scope of the invention as defined by the appended claims.

## Claims

1. A method for a second AAA server (204) comprising:
receiving a first authentication request from a network element apparatus (201), wherein said first authentication request is not relating to any ongoing session of said second AAA server (204) and comprises an user identity and a first indication indicating connection failure between the network element apparatus (201) and a first AAA server (203) which is associated with said user identity for providing authentication related service;
concluding, based on the received first authentication request, that said first AAA server (203) has failed;
sending a second authentication request to a subscriber server apparatus (202), wherein said second authentication request comprising said user identity and a second indication indicating the failure of said first AAA server (203).

2. The method according to claim 1, further comprising receiving a first response from said subscriber server apparatus (202) and sending a second response to said network element apparatus (201).

3. A method for a subscriber server apparatus (202) comprising receiving, from a second AAA server (204), a first authentication request comprising an user identity and an identity of said second AAA server (204), wherein said second AAA server (204) is configured to provide authentication related service with respect to said user identity;
determining if a first AAA server (203), originally associated with said user identity for providing authentication related service, is available for providing said service;
registering said second AAA server (204) as the server associated with said user identity for providing authentication related service, if said first AAA server (203) is not available;
sending a response to said second AAA server (204) to acknowledge the first authentication request.

4. The method according to claim 3, wherein said first authentication request comprises a first indication indicating the failure of the first AAA server (203) and said identity of the second AAA server (204) being different from an identity of the first AAA server (203).

5. The method according to claim 3, further comprises receiving an indication from the first server apparatus indicating the failure of said first AAA server (203).

6. The method according to claim 3, wherein determining if said first AAA server (203) is available comprises attempting to connect to said second server apparatus (203) periodically and checking if any response is heard from said first AAA server (203).

7. The method according to any of the preceding claims 4-6, further comprises removing the registration of said first AAA server (203) from said subscriber server apparatus (202) if it is determined that said first AAA server (203) is not available for providing authentication related service.

8. A second AAA server (204) comprising a processor (601), a memory unit (602), a receiver (604) and a transmitter (603), wherein
said receiver is configured to receive a first authentication request from a network element apparatus (201), wherein said first authentication request is not relating to any ongoing session of said second AAA server (204) and comprises an user identity and a first indication indicating the connection failure between the network element apparatus (201) and a first AAA server (203) which is associated with said user identity for providing authentication related service;
said processor (601) is configured to conclude, based on the received first authentication request, said first AAA server has failed;
said processor (601) is further configured to send a second authentication request to a subscriber server apparatus (202) via said transmitter (603), wherein said second authentication request comprising said user identity and a second indication indicating the failure of said first AAA server (203).

9. The apparatus according to claim 8, wherein said receiver (604) is further configured to receive to a first response from said subscriber server apparatus (202) and said processor (601) is further configured to send a second response to said network element apparatus (201) via said transmitter (603).

10. A subscriber server apparatus (202, 700) comprising a processor (701), a memory unit (702), a receiver (704) and a transmitter (703), wherein said receiver (704) is configured to receive, from a second AAA server (204), a first authentication request comprising an user identity and an identity of said second AAA server (204), wherein said second AAA server (204) is configured to provide authentication related service with respect to said user identity;
said processor (701) is configured to determine if a first AAA server (203), originally associated with said user identity for providing authentication related service, is available for providing said service,
register said second AAA server (204) as the server associated with said user identity for providing authentication related service, if said first AAA server (203) is not available, and
send a response to said second AAA server (204) to acknowledge the first authentication request.

11. The apparatus according to claim 10, wherein said first authentication request comprises a first indication indicating the failure of said first AAA server (203) and said identity of the second AAA server (204) being different from an identity of the first AAA server (203).

12. The apparatus according to claim 10, said receiver (704) is further configured to receive an indication from a first server apparatus indicating the failure of said first AAA server (203).

13. The apparatus according to any claim 10, wherein in order to determine if said first AAA server (203) is available, said processor (701) is further configured to attempt to connect to said first AAA server (203) periodically and to check if any response is heard from said first AAA server (203).

14. A computer program product for a second AAA server (204) comprising:
means for receiving a first authentication request from a network element apparatus (201), wherein said first authentication request is not relating to any ongoing session of said second AAA server (204) and comprises an user identity and a first indication indicating connection failure between the network element apparatus (201) and a first AAA server (203) which is associated with said user identity for providing authentication related service;
means for concluding, based on the received first authentication request, said first AAA server (203) has failed;
means for sending a second authentication request to a subscriber server apparatus (202), wherein said second authentication request comprising said user identity and a second indication indicating the failure of said first AAA server (203).

15. A computer program product for a subscriber server apparatus (202, 700) comprising:
means for receiving, from a second AAA server (204), a first authentication request comprising an user identity and an identity of said second AAA server (204), wherein said second AAA server (204) being capable for provide authentication related service with respect to said user identity;
means for determining if a first AAA server (203), originally associated with said user identity for providing authentication related service, is available for providing said service;
means for registering said second AAA server (204) as the server associated with said user identity for providing authentication related service, if said first AAA server (203) is not available;
means for sending a response to said second AAA server (204) to acknowledge the first authentication request.

## Patentansprüche

1. Verfahren für einen zweiten AAA-Server (204), umfassend:
Empfangen einer ersten Authentifizierungsanforderung von einer Netzwerkelementvorrichtung (201), wobei die erste Authentifizierungsanforderung nicht im Zusammenhang mit einer laufenden Sitzung des zweiten AAA-Servers (204) steht und eine Benutzeridentität und einen ersten Indikator aufweist, der einen Verbindungsfehler zwischen der Netzwerkelementvorrichtung (201) und einem ersten AAA-Server (203), der zum Bereitstellen eines authentifizierungsbezogenen Dienstes mit der Benutzeridentität assoziiert ist, anzeigt;
Folgern, basierend auf der empfangenen ersten Authentifizierungsanforderung, dass der erste AAA-Server (203) ausgefallen ist;
Senden einer zweiten Authentifizierungsanforderung an eine Teilnehmerservervorrichtung (202), wobei die zweite Authentifizierungsanforderung die Benutzeridentität und einen zweiten Indikator aufweist, der den Ausfall des ersten AAA-Servers (203) anzeigt.

2. Verfahren nach Anspruch 1, ferner umfassend Empfangen einer ersten Antwort von der Teilnehmerservervorrichtung (202) und Senden einer zweiten Antwort an die Netzwerkelementvorrichtung (201) .

3. Verfahren für eine Teilnehmerservervorrichtung (202), umfassend
Empfangen, von einem zweiten AAA-Server (204), einer ersten Authentifizierungsanforderung, die eine Benutzeridentität und eine Identität des zweiten AAA-Servers (204) aufweist, wobei der zweite AAA-Server (204) dafür ausgelegt ist, einen authentifizierungsbezogenen Dienst im Zusammenhang mit der Benutzeridentität bereitzustellen;
Ermitteln, ob ein erster AAA-Server (203), der zum Bereitstellen eines authentifizierungsbezogenen Dienstes ursprünglich mit der Benutzeridentität assoziiert ist, zum Bereitstellen des Dienstes zur Verfügung steht;
Registrieren des zweiten AAA-Servers (204) als den Server, der zum Bereitstellen eines authentifizierungsbezogenen Dienstes mit der Benutzeridentität assoziiert ist, wenn der erste AAA-Server (203) nicht zur Verfügung steht;
Senden einer Antwort an den zweiten AAA-Server (204), um die erste Authentifizierungsanforderung zu bestätigen.

4. Verfahren nach Anspruch 3, wobei die erste Authentifizierungsanforderung einen ersten Indikator aufweist, der den Ausfall des ersten AAA-Servers (203) anzeigt, und wobei sich die Identität des zweiten AAA-Servers (204) von einer Identität des ersten AAA-Servers (203) unterscheidet.

5. Verfahren nach Anspruch 3, das ferner ein Empfangen eines Indikators von der ersten Servervorrichtung umfasst, welcher den Ausfall des ersten AAA-Servers (203) anzeigt.

6. Verfahren nach Anspruch 3, wobei das Ermitteln, ob der erste AAA-Server (203) zur Verfügung steht, einen periodischen Verbindungsherstellungsversuch mit der zweiten Servervorrichtung (203) und ein Überprüfen, ob eine Antwort von dem ersten AAA-Server (203) empfangen wird.

7. Verfahren nach einem der vorhergehenden Ansprüche 4-6, das ferner ein Entfernen der Registrierung des ersten AAA-Servers (203) aus der Teilnehmerservervorrichtung (202) umfasst, wenn ermittelt wird, dass der erste AAA-Server (203) zum Bereitstellen eines authentifizierungsbezogenen Dienstes nicht zur Verfügung steht.

8. Zweiter AAA-Server (204), aufweisend einen Prozessor (601), eine Speichereinheit (602), einen Empfänger (604) und einen Sender (603), wobei
der zweite Empfänger dafür ausgelegt ist, eine erste Authentifizierungsanforderung von einer Netzwerkelementvorrichtung (201) zu empfangen, wobei die erste Authentifizierungsanforderung nicht im Zusammenhang mit einer laufenden Sitzung des zweiten AAA-Servers (204) steht und eine Benutzeridentität und einen ersten Indikator aufweist, der den Verbindungsfehler zwischen der Netzwerkelementvorrichtung (201) und einem ersten AAA-Server (203), der zum Bereitstellen eines authentifizierungsbezogenen Dienstes mit der Benutzeridentität assoziiert ist, anzeigt;
der Prozessor (601) dafür ausgelegt ist, basierend auf der empfangenen ersten Authentifizierungsanforderung zu folgern, dass der erste AAA-Server ausgefallen ist;
der Prozessor (601) ferner dafür ausgelegt ist, über den Sender (603) eine zweite Authentifizierungsanforderung an eine Teilnehmerservervorrichtung (202) zu senden, wobei die zweite Authentifizierungsanforderung die Benutzeridentität und einen zweiten Indikator aufweist, der den Ausfall des ersten AAA-Servers (203) anzeigt.

9. Vorrichtung nach Anspruch 8, wobei der Empfänger (604) ferner dafür ausgelegt ist, eine erste Antwort von der Teilnehmerservervorrichtung (202) zu empfangen, und der Prozessor (601) ferner dafür ausgelegt ist, über den Sender (603) eine zweite Antwort an die Netzwerkelementvorrichtung (201) zu senden.

10. Teilnehmerservervorrichtung (202, 700), aufweisend einen Prozessor (701), eine Speichereinheit (702), einen Empfänger (704) und einen Sender (703), wobei der Empfänger (704) dafür ausgelegt ist, von einem zweiten AAA-Server (204) eine erste Authentifizierungsanforderung zu empfangen, die eine Benutzeridentität und eine Identität des zweiten AAA-Servers (204) aufweist, wobei der zweite AAA-Server (204) dafür ausgelegt ist, einen authentifizierungsbezogenen Dienst im Zusammenhang mit der Benutzeridentität bereitzustellen;
wobei der Prozessor (701) dafür ausgelegt ist, zu ermitteln, ob ein erster AAA-Server (203), der zum Bereitstellen eines authentifizierungsbezogenen Dienstes ursprünglich mit der Benutzeridentität assoziiert ist, zum Bereitstellen des Dienstes zur Verfügung steht,
den zweiten AAA-Server (204) als den Server, der zum Bereitstellen eines authentifizierungsbezogenen Dienstes mit der Benutzeridentität assoziiert ist, zu registrieren, wenn der erste AAA-Server (203) nicht zur Verfügung steht, und
eine Antwort an den zweiten AAA-Server (204) zu senden, um die erste Authentifizierungsanforderung zu bestätigen.

11. Vorrichtung nach Anspruch 10, wobei die erste Authentifizierungsanforderung einen ersten Indikator aufweist, der den Ausfall des ersten AAA-Servers (203) anzeigt, und wobei sich die Identität des zweiten AAA-Servers (204) von einer Identität des ersten AAA-Servers (203) unterscheidet.

12. Vorrichtung nach Anspruch 10, wobei der Empfänger (704) ferner dafür ausgelegt ist, einen Indikator von einer ersten Servervorrichtung zu empfangen, der den Ausfall des ersten AAA-Servers (203) anzeigt.

13. Vorrichtung nach Anspruch 10, wobei der Prozessor (701), um zu ermitteln, ob der erste AAA-Server (203) zur Verfügung steht, ferner dafür ausgelegt ist, in periodischen Abständen zu versuchen, sich mit dem ersten AAA-Server (203) zu verbinden, und zu prüfen, ob eine Antwort von dem ersten AAA-Server (203) empfangen wird.

14. Computerprogrammprodukt für einen zweiten AAA-Server (204), aufweisend:
Mittel zum Empfangen einer ersten Authentifizierungsanforderung von einer Netzwerkelementvorrichtung (201), wobei die erste Authentifizierungsanforderung nicht im Zusammenhang mit einer laufenden Sitzung des zweiten AAA-Servers (204) steht und eine Benutzeridentität und einen ersten Indikator aufweist, der einen Verbindungsfehler zwischen der Netzwerkelementvorrichtung (201) und einem ersten AAA-Server (203), der zum Bereitstellen eines authentifizierungsbezogenen Dienstes mit der Benutzeridentität assoziiert ist, anzeigt;
Mittel zum Folgern, basierend auf der empfangenen ersten Authentifizierungsanforderung, dass der erste AAA-Server (203) ausgefallen ist;
Mittel zum Senden einer zweiten Authentifizierungsanforderung an eine Teilnehmerservervorrichtung (202), wobei die zweite Authentifizierungsanforderung die Benutzeridentität und einen zweiten Indikator aufweist, der den Ausfall des ersten AAA-Servers (203) anzeigt.

15. Computerprogrammprodukt für eine Teilnehmerservervorrichtung (202, 700), aufweisend:
Mittel zum Empfangen, von einem zweiten AAA-Server (204), einer ersten Authentifizierungsanforderung, die eine Benutzeridentität und eine Identität des zweiten AAA-Servers (204) aufweist, wobei der zweite AAA-Server (204) in der Lage ist, einen authentifizierungsbezogenen Dienst im Zusammenhang mit der Benutzeridentität bereitzustellen;
Mittel zum Ermitteln, ob ein erster AAA-Server (203), der zum Bereitstellen eines authentifizierungsbezogenen Dienstes ursprünglich mit der Benutzeridentität assoziiert ist, zum Bereitstellen des Dienstes zur Verfügung steht;
Mittel zum Registrieren des zweiten AAA-Servers (204) als den Server, der zum Bereitstellen eines authentifizierungsbezogenen Dienstes mit der Benutzeridentität assoziiert ist, wenn der erste AAA-Server (203) nicht zur Verfügung steht;
Mittel zum Senden einer Antwort an den zweiten AAA-Server (204), um die erste Authentifizierungsanforderung zu bestätigen.

## Revendications

1. Procédé pour un second serveur AAA (204) comprenant :
la réception d'une première demande d'authentification en provenance d'un appareil d'élément de réseau (201),
dans lequel ladite première demande d'authentification ne se rapporte pas à une quelconque session en cours dudit second serveur AAA (204) et comprend une identité d'utilisateur et une première indication indiquant un échec de connexion entre l'appareil d'élément de réseau (201) et un premier serveur AAA (203) qui est associé à ladite identité d'utilisateur pour fournir un service lié à une authentification ;
la conclusion, en se basant sur la première demande d'authentification reçue, que ledit premier serveur AAA (203) a échoué ;
l'envoi d'une seconde demande d'authentification à un appareil de serveur d'abonné (202), dans lequel ladite seconde demande d'authentification comprend ladite identité d'utilisateur et une seconde indication indiquant l'échec dudit premier serveur AAA (203).

2. Procédé selon la revendication 1, comprenant en outre
la réception d'une première réponse en provenance dudit appareil de serveur d'abonné (202) et l'envoi d'une seconde réponse audit appareil d'élément de réseau (201).

3. Procédé pour un appareil de serveur d'abonné (202) comprenant la réception, en provenance d'un second serveur AAA (204), d'une première demande d'authentification comprenant une identité d'utilisateur et une identité dudit second serveur AAA (204), dans lequel ledit second serveur AAA (204) est configuré pour fournir un service lié à une authentification par rapport à ladite identité d'utilisateur ;
la détermination si un premier serveur AAA (203), associé à l'origine à ladite identité d'utilisateur pour fournir un service lié à une authentification, est disponible pour fournir ledit service ;
l'enregistrement dudit second serveur AAA (204) en tant que serveur associé à ladite identité d'utilisateur pour fournir un service lié à une authentification si ledit premier serveur AAA (203) n'est pas disponible ; l'envoi d'une réponse audit second serveur AAA (204) pour accuser réception de la première demande d'authentification.

4. Procédé selon la revendication 3, dans lequel ladite première demande d'authentification comprend une première indication indiquant l'échec du premier serveur AAA (203) et ladite identité du second serveur AAA (204) étant différente d'une identité du premier serveur AAA (203) .

5. Procédé selon la revendication 3, qui comprend en outre la réception d'une indication en provenance du premier appareil de serveur indiquant l'échec dudit premier serveur AAA (203).

6. Procédé selon la revendication 3, dans lequel la détermination si ledit premier serveur AAA (203) est disponible, comprend la tentative de se connecter audit second appareil de serveur (203) périodiquement et la vérification qu'une réponse quelconque est entendue en provenance dudit premier serveur AAA (203).

7. Procédé selon l'une quelconque des revendications 4 à 6, qui comprend en outre la suppression de l'enregistrement dudit premier serveur AAA (203) dudit appareil de serveur d'abonné (202) s'il est déterminé que ledit premier serveur AAA (203) n'est pas disponible pour fournir un service lié à une authentification.

8. Second serveur AAA (204) comprenant un processeur (601), une unité de mémoire (602), un récepteur (604) et un émetteur (603), dans lequel
ledit récepteur est configuré pour recevoir une première demande d'authentification en provenance d'un appareil d'élément de réseau (201), dans lequel ladite première demande d'authentification ne se rapporte pas à une quelconque session en cours dudit second serveur AAA (204) et comprend une identité d'utilisateur et une première indication indiquant l'échec de connexion entre l'appareil d'élément de réseau (201) et un premier serveur AAA (203) qui est associé à ladite identité d'utilisateur pour fournir un service lié à une authentification ;
ledit processeur (601) est configuré pour conclure, en se basant sur la première demande d'authentification reçue, que ledit premier serveur AAA a échoué ;
ledit processeur (601) est en outre configuré pour envoyer une seconde demande d'authentification à un appareil de serveur d'abonné (202) par le biais dudit émetteur (603), dans lequel ladite seconde demande d'authentification comprend ladite identité d'utilisateur et une seconde indication indiquant l'échec dudit premier serveur AAA (203).

9. Appareil selon la revendication 8, dans lequel ledit récepteur (604) est en outre configuré pour recevoir une première réponse en provenance dudit appareil de serveur d'abonné (202) et ledit processeur (601) est en outre configuré pour envoyer une seconde réponse audit appareil d'élément de réseau (201) par le biais dudit émetteur (603) .

10. Appareil de serveur d'abonné (202, 700) comprenant un processeur (701), une unité de mémoire (702), un récepteur (704) et un émetteur (703), dans lequel ledit récepteur (704) est configuré pour recevoir, en provenance d'un second serveur AAA (204), une première demande d'authentification comprenant une identité d'utilisateur et une identité dudit second serveur AAA (204), dans lequel ledit second serveur AAA (204) est configuré pour fournir un service lié à une authentification par rapport à ladite identité d'utilisateur ;
ledit processeur (701) est configuré pour déterminer si un premier serveur AAA (203), associé à l'origine à ladite identité d'utilisateur pour fournir un service lié à une authentification, est disponible pour fournir ledit service ;
pour enregistrer ledit second serveur AAA (204) en tant que serveur associé à ladite identité d'utilisateur pour fournir un service lié à une authentification si ledit premier serveur AAA (203) n'est pas disponible et
pour envoyer une réponse audit second serveur AAA (204) pour accuser réception de la première demande d'authentification.

11. Appareil selon la revendication 10, dans lequel ladite première demande d'authentification comprend une première indication indiquant l'échec dudit premier serveur AAA (203) et ladite identité du second serveur AAA (204) étant différente d'une identité du premier serveur AAA (203).

12. Appareil selon la revendication 10, ledit récepteur (704) est en outre configuré pour recevoir une indication en provenance d'un premier appareil de serveur indiquant l'échec dudit premier serveur AAA (203).

13. Appareil selon la revendication 10, dans lequel, afin de déterminer si ledit premier serveur AAA (203) est disponible, ledit processeur (701) est en outre configuré pour tenter de se connecter audit premier serveur AAA (203) périodiquement et pour vérifier si une réponse quelconque est entendue en provenance dudit premier serveur AAA (203).

14. Produit-programme d'ordinateur pour un second serveur AAA (204) comprenant :
des moyens pour recevoir une première demande d'authentification en provenance d'un appareil d'élément de réseau (201), dans lequel ladite première demande d'authentification ne se rapporte pas à une quelconque session en cours dudit second serveur AAA (204) et comprend une identité d'utilisateur et une première indication indiquant un échec de connexion entre l'appareil d'élément de réseau (201) et un premier serveur AAA (203) qui est associé à ladite identité d'utilisateur pour fournir un service lié à une authentification ;
des moyens pour conclure, en se basant sur la première demande d'authentification reçue, que ledit premier serveur AAA (203) a échoué ;
des moyens pour envoyer une seconde demande d'authentification à un appareil de serveur d'abonné (202), dans lequel ladite seconde demande d'authentification comprend ladite identité d'utilisateur et une seconde indication indiquant l'échec dudit premier serveur AAA (203).

15. Produit-programme d'ordinateur pour un appareil de serveur d'abonné (202, 700) comprenant :
des moyens pour recevoir, en provenance d'un second serveur AAA (204), une première demande d'authentification comprenant une identité d'utilisateur et une identité dudit second serveur AAA (204), dans lequel ledit second serveur AAA (204) est capable de fournir un service lié à une authentification par rapport à ladite identité d'utilisateur ;
des moyens pour déterminer si un premier serveur AAA (203), associé à l'origine à ladite identité d'utilisateur pour fournir un service lié à une authentification, est disponible pour fournir ledit service ;
des moyens pour enregistrer ledit second serveur AAA (204) en tant que serveur associé à ladite identité d'utilisateur pour fournir un service lié à une authentification si ledit premier serveur AAA (203) n'est pas disponible ;
des moyens pour envoyer une réponse audit second serveur AAA (204) pour accuser réception de la première demande d'authentification.
